# EUROPEAN PATENT SPECIFICATION

(11) **EP 0 899 138 B1**
(45) Date of publication and mention of the grant of the patent: **26.02.2003**
(21) Application number: 98202817.7
(22) Date of filing: 21.08.1998
(51) Int. Cl.: B60J 7/00

(54) **Open roof contruction for a vehicle**
Öffnungsfähige Dachkonstruktion für ein Fahrzeug
Construction pour toit ouvrant de véhicule

(30) Priority: 29.08.1997 NL 1006883
(43) Date of publication of application: 03.03.1999
(73) Proprietor: Inalfa Industries B.V., 5804 AB Venray (NL)
(72) Inventor: Lenkens, Petrus Christiaan Martinus, 5835 AC Beugen (NL)
(74) Representative: Metman, Karel Johannes

(56) References cited:
- EP-A- 0 195 137

## Description

The present invention relates to an open roof construction for a vehicle according to the preamble of claim 1.

Various embodiments of such open roof constructions are known. In one embodiment, for example, (DE-C-29 23 904) the means for moving back the screen a small distance towards the closed position consist of a projection provided under the closing element, which only engages a co-acting element of the screen near the closed position of the closing element and moves it slightly in forward direction thereby. A drawback of this construction is the fact that the closing element must be closed completely in order to move the screen a small distance.

In another embodiment (EP-A-0 195 137, from which the preamble of claim 1 is known), a special spring and locking device is provided on the screen, which ensures that the screen remains locked in its entirely open position, whilst said locking can be manually released again, after which a spring causes the panel to move back again. A drawback of this construction is the fact that a special manual operation is required.

The object of the invention is to provide an open roof construction of the kind referred to in the introduction, wherein the above drawbacks are efficiently eliminated.

In order to accomplish that objective the open roof construction according to the invention is characterized by the features of the characterizing portion of claim 1.

With such an anti-trap device, the opposing forces experienced during movement of the closing element to the closed position are measured, and since anti-trap devices must be set increasingly sensitively these days, each and every resistance experienced during the movement of the closing element may activate the anti-trap device. Since the screen can be moved back in the direction of the closed position by means of the spring construction, that is, without being driven by the closing element, the closing element will not experience any additional resistance as a result of having to carry the screen, so that no errors in the anti-trap device can be caused.

Thus, according to the invention, it is not only ensured, by using a very simple construction, that the screen will directly be accessible again when the closing element is returned to the closed position, but this is done in a manner not disturbing the anti-trap device.

The invention will be explained in more detail hereafter with reference to the drawing schematically showing an embodiment of the open roof construction according to the invention by way of example.

Figs. 1a-d are highly schematic longitudinal sectional views of an embodiment of the open roof construction according to the invention, which show the closing element and the screen in various positions thereof.

Fig. 2 is a larger-scale schematice plan view of a small part of the open roof construction with the spring construction.

Fig. 3 is a perspective, exploded view of the components of the spring construction of Fig. 2.

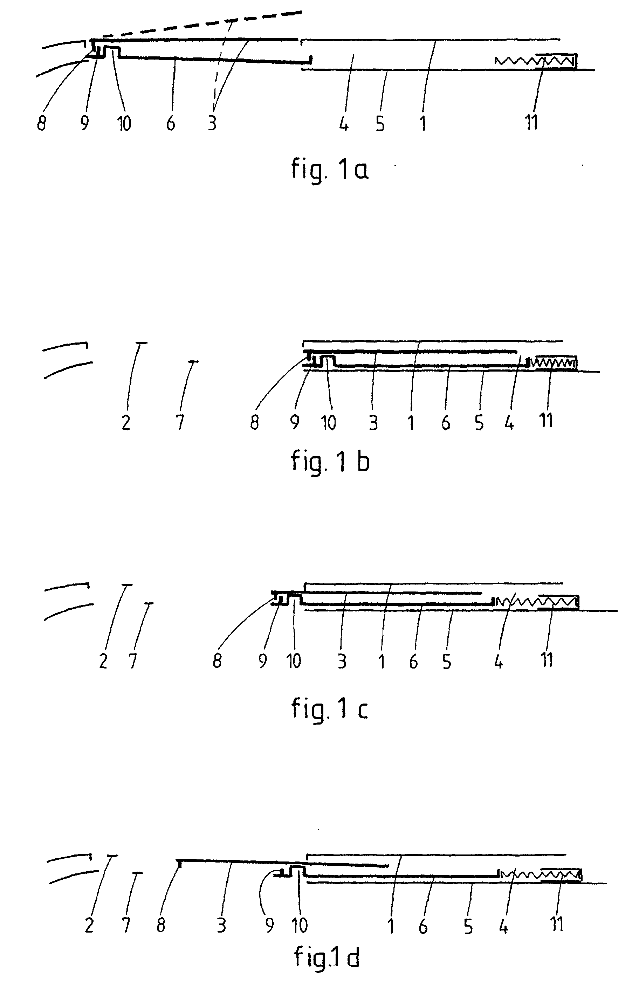

Fig. 1 shows the fixed roof 1 of a vehicle, such as a passenger car. A roof opening 2 is recessed or formed in said fixed roof, which roof opening is intended for receiving an open roof construction. In the present embodiment, said open roof construction consists of a so-called tilting-sliding roof comprising a panel 3 of a rigid, substantially transparent material, such as glass or plastic. Panel 3 can be moved from its closed position in roof opening 3, on the one hand to an upwardly inclined, pivoted venting position (indicated by dashed lines in Fig. 1), and on the other hand slightly downwardly and subsequently rearwardly into a receiving space 4 between fixed roof 1 and a roof lining 5 or other frame part.

The open roof construction is furthermore provided with an interior panel or screen 6, in this case in the form of a sun screen. In its closed position, said sun screen 6 closes a passage 7 in roof lining 5 (Fig. la), and from said closed position it can be moved rearwardly into receiving space 4. Panel 3 and sun screen 6 are provided with catch means 8, 9, which are mounted on the lower side of panel 3 and on the upper side of sun screen 6, near the front side thereof, respectively. Another possibility would be to have a water drain connected to panel 3 engage a flange of the sun screen, so that said water drain and said flange function as catch means. When moving from the closed position to the entirely open position, panel 3 carries sun screen 6 to within receiving space 4 (Fig. 1b). In this entirely rearward position, a grip 10 near the front side of sun screen 6, is positioned above roof lining 5, and consequently it cannot be reached by hand for moving forwards sun screen 6 manually.

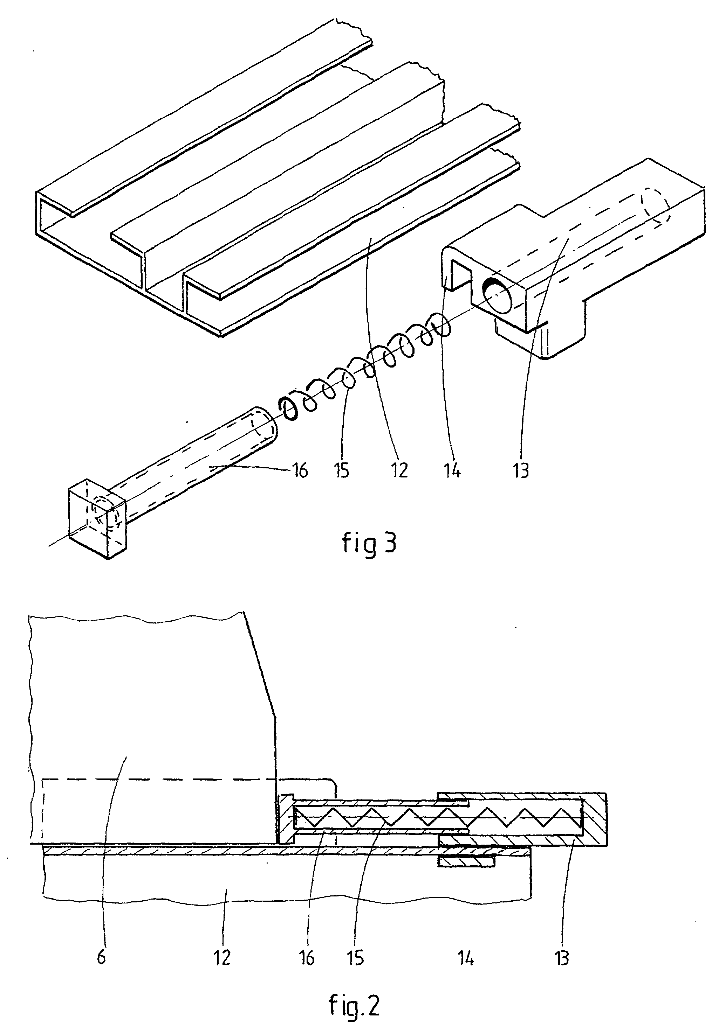

In order to make grip 10 of sun screen 6 accessible again, without there being a need for panel 3 or the drive unit thereof to exert driving forces on sun screen 6, the invention provides a spring construction 11, which will be explained in more detail with reference to Figs. 2 and 3.

The spring construction 11 is disposed in the path of sun screen 6, in such a manner that sun screen 6 loads the spring construction and stores energy during the last part of its movement to the entirely open position. Said spring construction thus exerts a force on sun screen 6 in the direction of the closed position thereof, so that sun screen 6 will follow panel 3 when said panel is moved back to the closed position (whereby catch means 8 and 9 remain engaged) until the spring construction 11 is fully released and grip 10 has become accessible again in front of the roof lining 5 (Fig. 1C). Upon further movement of panel 3 in the direction of the closed position, sun screen 6 will remain in its position (Fig. 1d). Now the sun screen 6 can be further moved to an entirely or partially closed position by hand, if desired.

Figs. 2 and 3 show the spring construction 11 in more detail, wherein it must be considered that a spring construction of this kind may be provided near each longitudinal side of sun screen 6.

In Fig. 2 a stationary guide rail 12 can be distinguished, which may form part of or be attached to a frame of the open roof construction. Stationary guide rail 12 is provided along each longitudinal edge of roof opening 2 and co-axially rearwards thereof, it functions to guide the movement mechanism for panel 3 and to guide sun screen 6, whose longitudinal edges are positioned within guide rail 12, during its sliding movement. A stop 13 is mounted in the stationary guide rail 12 near the rear end thereof or snapped therein by means of a fastening element 14. Said stop 13 determines the rearmost position of sun screen 6. Said stop 13 furthermore functions to accommodate a helical compression spring 15, which cooperates with a pressure element 16, with which the rear edge of sun screen 6 can make contact. Said pressure element 16 is movable within a spring recess of stop 13, and it is secured against being ejected in a manner which is not shown. Said pressure element 16 is thus movable to and fro over a predetermined distance, whereby the spring force of compression spring 15 still delivers sufficient force for moving sun screen 6 when pressure element 16 occupies its maximally extended position. In said maximally extended position of pressure element 16, the grip 10 present on the front side of sun screen 6 can just be reached in front of roof lining 5. It is noted that the resistance which the panel drive experiences when spring 15 is compressed does not have any influence on the anti-trap device, since said anti-trap device is only operative during movements of the panel in the direction of the closed position when there is a danger of the panel trapping.

From the foregoing it will be apparent that the invention provides a very simple way of relieving the load on the electrical drive unit of the closing element of an open roof construction and moving a screen automatically over some distance.

The invention is not limited to the illustrated, above-described embodiment, which can be varied in several ways within the scope of the invention. Thus, the invention may also be used for other types of roofs, such as slatted roofs, folding roofs or the like.

## Claims

1. An open roof construction for a vehicle having an opening (2) in its fixed roof (1), which construction comprises a movable closing element (3) for selectively closing or at least partially releasing said roof opening by moving the closing element into a receiving space (4) present between the fixed roof and a roof lining (5), driving means for moving the closing element, as well as a screen (6) which is capable of moving under said closing element, which screen can likewise be moved into said receiving space between the fixed roof and a roof lining, whereby catch means (8, 9) are provided for carrying the screen to the completely open position when the closing element is being opened, whilst furthermore spring means (11) are provided to exert a force on the screen (6) in the direction of the closed position thereof, at least in the entirely open position of the closing element (3), **characterized in that** said driving means comprises an electric motor, which is controlled electronically by means of a control unit which is equipped with an anti-trap device, and **in that** said spring means (11) is adapted to return the screen at least partially to the closed position when the closing element is returned from the open position towards the closed position.

2. An open roof construction according to claim 1, wherein said screen (6) is provided with a grip (10), which is not accessible in the entirely open position of the screen, whilst the spring construction (11) is arranged for returning the screen from said receiving space (4) in such a manner that said grip will become accessible.

3. An open roof construction according to any one of the preceding claims, wherein the closing element (3) and the screen (6) are guided in stationary guide rails (12) on either side of the roof opening (2), whilst the spring construction (11) is supported on said guide rails.

4. An open roof construction according to claim 3, wherein said spring construction (11) comprises a stop (13), which is attached to said guide rail (12) by means of a snap connection (14), which houses a compression spring (15), against which the screen (6) strikes when moving to the entirely open position.

5. An open roof construction according to any one of the preceding claims, wherein the catch means (8, 9) are provided on the lower side of the closing element (3) and on the upper side of the screen (6).

6. An open roof construction according to any one of the preceding claims, wherein said closing element (3) consists of a substantially rigid, transparent panel and wherein said screen (6) is a sun screen.

## Patentansprüche

1. Offene Dachkonstruktion für ein Fahrzeug mit einer Öffnung (2) in dessen feststehendem Dach (1), welche Konstruktion sowohl ein bewegbares Schließelement (3) zum selektiven Schließen oder zumindest teilweisen Freigeben der Dachöffnung durch Bewegen des Schließelements in einen Aufnahmeraum (4) hinein, der zwischen dem feststehenden Dach und einer Dachverkleidung (5) vorhanden ist, Antriebsmittel zum Bewegen des Schließelements, als auch eine Blende (6) aufweist, welche zum Bewegen unter dem Schließelement geeignet ist, welche Blende gleichfalls in den Aufnahmeraum zwischen dem feststehenden Dach und einer Dachverkleidung hinein bewegt werden kann, wobei Rastmittel (8, 9) zum Verfahren der Blende in die vollständig offene Position vorgesehen sind, wenn das Schließelement geöffnet ist, während ferner Federmittel (11) vorgesehen sind, um eine Kraft auf die Blende (6) in die Richtung deren geschlossener Position zumindest in der vollständig offenen Position des Schließelements (3) auszuüben, **dadurch gekennzeichnet, dass** das Antriebsmittel einen Elektromotor aufweist, welcher mittels einer Steuereinheit elektronisch gesteuert wird, welche mit einer Anti-Fangvorrichtung ausgestattet ist, und dass das Federmittel (11) zum Zurückkehren der Blende zumindest teilweise in die geschlossene Position angepasst ist, wenn das Schließelement von der offenen Position in die geschlossene Position zurückgekehrt ist.

2. Offene Dachkonstruktion nach Anspruch 1, wobei die Blende (6) mit einem Griff (10) versehen ist, welcher in der vollständig offenen Position der Blende nicht zugänglich ist, während die Federkonstruktion (11) zum Zurückkehren der Blende aus dem Aufnahmeraum (4) derart angeordnet ist, dass der Griff zugänglich ist.

3. Offene Dachkonstruktion nach einem der vorhergehenden Ansprüche, wobei das Schließelement (3) und die Blende (6) in stationären Führungsschienen (12) an jeder Seite der Dachöffnung (2) geführt sind, während die Federkonstruktion (11) an den Führungsschienen abgestützt ist.

4. Offene Dachkonstruktion nach Anspruch 3, wobei die Federkonstruktion (11) einen Anschlag (13) aufweist, welcher an der Führungsschiene (12) mittels einer Schnappverbindung (14) angebracht ist, welche eine Druckfeder (15) unterbringt, gegen welche die Blende (6) stößt, wenn sie in die vollständig offene Position bewegt wird.

5. Offene Dachkonstruktion nach einem der vorhergehenden Ansprüche, wobei die Rastmittel (8, 9) an der unteren Seite des Schließelements (3) und an der oberen Seite der Blende (6) vorgesehen sind.

6. Offene Dachkonstruktion nach einem der vorhergehenden Ansprüche, wobei das Schließelement (3) aus einem im wesentlichen festen, transparenten Paneel besteht, und wobei die Blende (6) eine Sonnenblende ist.

## Revendications

1. Construction de toit ouvrant pour un véhicule ayant une ouverture (2) dans son toit fixe (1), laquelle construction comprend un élément de fermeture mobile (3) pour fermer sélectivement ou au moins pour libérer partiellement ladite ouverture de toit en déplaçant l'élément de fermeture dans un espace de réception (4) disposé entre le toit fixe et une garniture de toit (5), des moyens d'entraînement pour déplacer l'élément de fermeture, ainsi qu'un écran (6) qui est apte à se déplacer sous ledit élément de fermeture, lequel écran peut de même être déplacé dans ledit espace de réception entre le toit fixe et une garniture de toit, moyennant quoi il est prévu des moyens d'accrochage pour amener l'écran sur la position complètement ouverte lorsque l'élément de fermeture est ouvert, tandis que par ailleurs il est prévu des moyens de ressort (11) pour exercer une force sur l'écran (6) dans la direction de sa position fermée, au moins dans la position complètement ouverte de l'élément de fermeture (3), **caractérisé en ce que** lesdits moyens d'entraînement comprennent un moteur électrique qui est commandé électroniquement par le biais d'une unité de commande qui est équipée d'un dispositif anti-pincement, et **en ce que** lesdits moyens de ressort (11) sont aptes à ramener l'écran au moins partiellement sur la position fermée lorsque l'élément de fermeture est ramené de la position ouverte à la position fermée.

2. Construction de toit ouvrant selon la revendication 1, dans laquelle ledit écran (6) est équipé d'une poignée (10) qui n'est pas accessible dans la position complètement ouverte de l'écran, tandis que la construction de ressort (11) est apte à faire revenir l'écran depuis ledit espace de réception (4) de telle sorte que ladite poignée devient accessible.

3. Construction de toit ouvrant selon l'une quelconque des revendications précédentes, dans laquelle l'élément de fermeture (3) et l'écran (6) sont guidés dans des glissières de guidage stationnaires (12) de chaque côté de l'ouverture du toit (2), tandis que la construction de ressort (11) est montée sur lesdites glissières.

4. Construction de toit ouvrant selon la revendication 3, dans laquelle ladite construction (11) comprend une butée (13) qui est fixée sur ladite glissière (12) au moyen d'un raccordement par encliquetage (14) et qui loge un ressort de compression (15) contre lequel l'écran (6) vient en contact lors du déplacement sur la position complètement ouverte.

5. Construction de toit ouvrant selon l'une quelconque des revendications précédentes, dans laquelle les moyens d'accrochage (8,9) sont disposés sur le côté inférieur de l'élément de fermeture (3) et sur le côté supérieur de l'écran (6).

6. Construction de toit ouvrant selon l'une quelconque des revendications précédentes, dans laquelle ledit élément de fermeture (3) consiste en un panneau transparent, sensiblement rigide et dans laquelle ledit écran (6) est un pare-soleil.
